# EUROPEAN PATENT APPLICATION

(11) **EP 4 775 471 A1**
(43) Date of publication of application: **15.07.2026**
(21) Application number: 25223657.5
(22) Date of filing: 16.12.2025
(51) Int. Cl.: B62B 7/10

(54) **FOLDABLE AND COLLAPSIBLE MODULE, CHASSIS, STROLLER FRAME AND STROLLER**

(30) Priority: 18.12.2024 CN 202411867436; 18.12.2024 CN 202411867429; 26.08.2025 CN 202511199659
(71) Applicant: Ningbo MyBaby Baby & Children Products Manufacturing Co., Ltd., Ningbo Zhejiang 315300 (CN)
(72) Inventor: LIU, Jianhua, Ningbo, 315300 (CN); DU, Zhipeng, Ningbo, 315300 (CN)
(74) Representative: Huang, Liwei

(57) **Abstract**

The present invention provides a foldable and collapsible module, including a first support rod and a second support rod; a first trigger portion arranged on the second support rod; a second trigger portion arranged on the first support rod; two wheels arranged on a first end of the first support rod and a first end of the second support rod, respectively; a first reversing portion arranged on the first support rod, wherein the first trigger portion and the first reversing portion are in transmission connection; and a second reversing portion arranged on second support rod, wherein the second trigger portion and the second reversing portion are in transmission connection, and the first reversing portion and the second reversing portion are both connected to the corresponding wheels.

## Description

### FIELD OF THE INVENTION

The present invention belongs to the technical field of movable devices, and in particular, relates to a foldable and collapsible module, a chassis, stroller frame and a stroller.

### BACKGROUND OF THE INVENTION

Foldable children's strollers are common means of transportation for children. They are pushed by adults while children are sitting therein. To facilitate their use and storage, the strollers are designed and manufactured in such a way that advantages such as lightweight overall frame, convenient folding and opening operations and compact size after full folding should be achieved while the safety is ensured.

In the prior art, most foldable children's strollers cannot achieve full folding, i.e., minimized size. In particular, the wheels have no such a functionality of one-click folding, resulting in the folded strollers that are not small enough in size and are not convenient to collapse and carry. Furthermore, the wheels of some foldable children's strollers are not foldable or need to be folded manually, both of which are not conducive to the convenience in using the foldable children's strollers.

### SUMMARY OF THE INVENTION

In view of the aforementioned problems existing in the prior art, an object of the present invention is to provide a foldable and collapsible module allowing for synchronous flipping of wheels along with the state adjustment of support rods on a stroller frame.

The object of the present invention can be achieved by means of the following technical solution: a foldable and collapsible module, including: a first support rod and a second support rod, wherein an extension direction of the first support rod and an extension direction of the second support rod are arranged in parallel, and a length between the first support rod and the second support rod is adjustable; along the axial direction of the first support rod, the total length of the first support rod and the second support rod is adjustable; a first trigger portion arranged on the second support rod; a second trigger portion arranged on the first support rod; two wheels, wherein the two wheels are arranged on a first end of the first support rod and a first end of the second support rod, respectively; a first reversing portion arranged on the first support rod, wherein the first trigger portion and the first reversing portion are in transmission connection; and a second reversing portion arranged on the second support rod, wherein the second trigger portion and the second reversing portion are in transmission connection, and the first reversing portion and the second reversing portion are both connected to the corresponding wheels; as the length between the first support rod and the second support rod decreases, the first trigger portion acts on the first reversing portion, and the second trigger portion acts on the second reversing portion, such that the first reversing portion and the second reversing portion operate correspondingly, to switch the wheels from an usage state to a collapsed state; and as the length between the first support rod and the second support rod increases, the first trigger portion acts on the first reversing portion, and the second trigger portion acts on the second reversing portion, such that the first reversing portion and the second reversing portion operate correspondingly, to switch the wheels from the collapsed state to the usage state.

In the aforementioned foldable and collapsible module, the first trigger portion comprises a rotation slot, the first reversing portion comprises an insertion column, and the insertion column extends into the rotation slot and is movable along a trajectory of the rotation slot; or the first trigger portion comprises an insertion column, the first reversing portion comprises a rotation slot, and the wheel and the corresponding first support rod are fixed to each other.

In the aforementioned foldable and collapsible module, wherein the first reversing portion comprises an reversing inclined plane arranged on an end of the first support rod; the first trigger portion comprises a force-application inclined plane arranged on an end of the second support rod; the wheel and first support rod are fixed to each other; and as the reversing inclined plane and the force-application inclined plane approach each other, the force-application inclined plane and the reversing inclined plane are abutted against each other to drive the wheel on the first support rod to collapse.

In the aforementioned foldable and collapsible module, the second reversing portion comprises a hinged block moving in a linear direction; a linear movement direction of the hinged block is not in parallel with an axial direction of the second support rod; the hinged block and the second trigger portion are in transmission connection; the hinged block and the wheel are hinged to each other via a pull rod; and the corresponding wheel is rotatable around the axial of the second support rod.

A chassis, comprising two foldable and collapsible modules; and two connecting rods connecting the two foldable and collapsible modules; wherein one of the connecting rods has its two ends respectively connected to the first support rod of each of the two foldable and collapsible modules, and the other connecting rod has its two ends respectively connected to the second support rod of each of the two foldable and collapsible modules.

In the aforementioned chassis, each of the second trigger portions comprises a trigger rod arranged on an end of the corresponding first support rod, the trigger rod is slidable along the axial direction of the second support rod, and the trigger rod and the corresponding hinged block are hinged to each other via a push rod; the trigger rod is provided with an adjustment slot extending in an axial direction, and an end of the corresponding first support rod is fixedly provided with a trigger block that extends into the adjustment slot.

In the aforementioned chassis, a transmission block is arranged between the two second support rods; two force application rods are hinged to both sides of the transmission block, respectively; the force application rods and the corresponding hinged blocks are hinged; the transmission block is movable in the axial direction of the second support rods; and the second trigger portions are movable in the axial direction of the second support rods and are in transmission connection with the transmission block.

In the aforementioned chassis, the two second trigger portions are fixed to each other via a transmission rod; the transmission rod is rotationally provided with a connecting portion; and a hinged rod is arranged between the connecting portion and the transmission block for transmission.

In the aforementioned chassis, the connecting portion and the transmission rod are in rotational connection therebetween; the connecting portion is provided with a limiting slot; the transmission rod is fixedly provided with a limiting portion; the limiting portion extends into the limiting slot; and the limiting portion is abuttable against the limiting slot.

In the aforementioned chassis, one or two of the connecting rods is/are provided with brake pedals that are rotatable relative to each other; each of the wheels is fixedly provided with a brake block; a plurality of brake slots are arranged at intervals in a circular pattern on the brake block around a rolling axis of the wheel; the wheel is provided with a brake rod; the brake rod is movable vertically relative to the rolling axis of the wheel; the brake rod and the brake pedal are in transmission connection; and as the brake pedals are pedaled down, the brake rod extends into the brake slot.

In the aforementioned chassis, each of the connecting rods is provided with a linearly movable drive rod; the drive rod has one end abutted against an end of the brake rod; each of the brake pedals is provided with a connecting slot; a transmission inclined plane is arranged inside the connecting slot; the transmission inclined plane is abutted against the other end of the drive rod, and as the brake pedals are pedaled down, the transmission inclined plane rotates to drive the drive rod to slide towards to both sides, and the drive rod drives the brake rod to extend into the brake slot.

A stroller frame, comprising the chassis and further comprising a stroller assembly, wherein the stroller assembly comprises two push bars that operate synchronously; the two push bars are hinged to the corresponding second support rods, respectively; a diagonal bracing rod is hinged on each of the second trigger portions and is hinged to the corresponding push bar; and when the first support rod and the second support rod are in usage state, a triangle is formed among axes of the push bar, the diagonal bracing rod and the first support rod.

In the aforementioned stroller frame, wherein each of the push bars comprises a first push handle and a second push handle; the two first push handles are fixed via a connecting push handle therebetween for fixation; the second push handles and the second support rods are hinged; the first push handles and the second push handles are rotationally connected to each other; first locking members are arranged between the first push handles and the second push handles; and second locking members are arranged between the second push handles and the second support rods.

In the aforementioned stroller frame, wherein each of the diagonal bracing rods comprises a first upright rod and a second upright rod that are sleeved with each other and are slidable; the first upright rod and the second push handle are hinged; the second upright rod and the first support rod are hinged; a shock-absorbing elastic member is abutted between the first upright rod and the second upright rod; the diagonal bracing rods serve to connect a seat; each of the push bars comprises a first push handle and a second push handle; the two first push handles are fixed by means of a connecting push handle therebetween; the second push handles and the second support rods are hinged; the first push handles and the second push handles are rotationally connected to each other; first locking members are arranged between the first push handles and the second push handles; and second locking members are arranged between the diagonal bracing rods and the second support rods.

A stroller, comprising the stroller frame, and further comprising a seat, wherein a middle portion of the seat is connected to the diagonal bracing rods via first connecting rods therebetween; one end of the seat is hinged to the push bars via second connecting rods therebetween; one end of the seat is hinged to the diagonal bracing rods via third connecting rods therebetween; and when the push bars are folded and collapsed relative to the second support rods, the seat flips relatively therewith.

Compared with the prior art, the present invention has the following beneficial effects: when the first support rod and the second support rod are collapsed relative to each other, the first trigger portion acts on the first reversing portion, and the second trigger portion acts on the second reversing portion, to trigger the first reversing portion and the second reversing portion to operate correspondingly, thereby switching the wheels from anusage state to a collapsed state, such that the large footprint is reduced during idling, and meanwhile, the treads of the wheels are prevented from contacting the ground or other holding surfaces, thereby avoiding shaking or shifting of the stroller or a further movable device. That is, the synchronous flipping and folding of the wheels can be achieved during the process of collapsing the first and second support rods.

### BRIEF DESCRIPTION OF THE DRAWINGS

FIG. 1 is a schematic diagram of a three-dimensional structure of a foldable and collapsible module;
FIG. 2 is a schematic diagram of planar structure of foldable and collapsible module shown in FIG. 1;
FIG. 3 is a schematic diagram of collapsed structure of the foldable and collapsible module shown in FIG. 2;
FIG. 4 is a schematic structural diagram of a foldable and collapsible module according to a second implementation;
FIG. 5 is a schematic diagram of an operational process of the foldable and collapsible module shown in FIG. 4;
FIG. 6 is a schematic structural diagram of a foldable and collapsible module according to a third implementation;
FIG. 7 is a schematic diagram of an operational process of the foldable and collapsible module shown in FIG. 6;

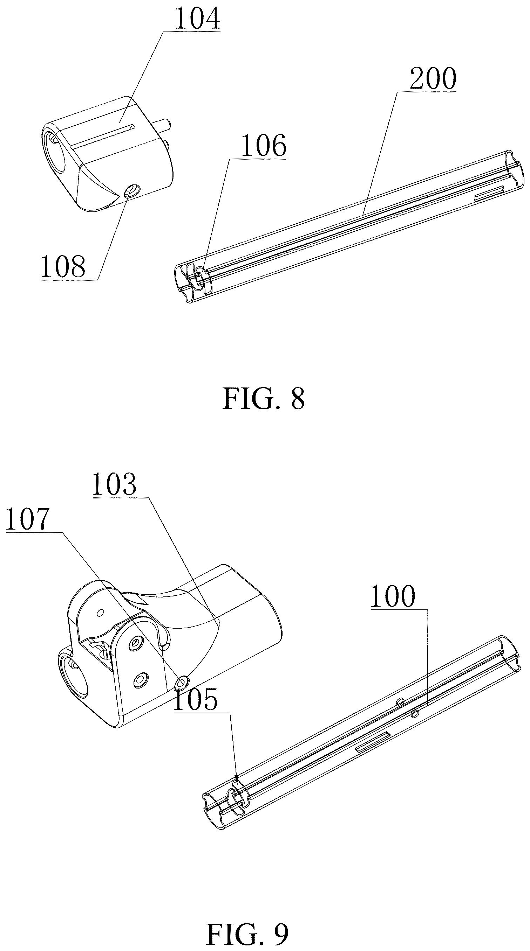

FIG. 8 is a schematic diagram of an exploded structure of a second support rod in FIG. 4;
FIG. 9 is a schematic diagram of an exploded structure of a first support rod in FIG. 4;
FIG. 10 is a schematic structural diagram of a chassis consisting of the foldable and collapsible modules shown in FIG. 4;
FIG. 11 is a first schematic diagram of a collapsing process of the first support rod shown in FIG. 10;
FIG. 12 is a second schematic diagram of a collapsing process of the first support rod shown in FIG. 10;
FIG. 13 is a third schematic diagram of a collapsing process of the first support rod shown in FIG. 10;
FIG. 14 is a fourth schematic diagram of a collapsing process of the first support rod shown in FIG. 10;
FIG. 15 is a schematic diagram of a chassis consisting of the foldable and collapsible modules shown in FIG. 1;
FIG. 16 is a first schematic diagram of an exploded structure of the chassis shown in FIG. 15;
FIG. 17 is a second schematic diagram of an exploded structure of the chassis shown in FIG. 15;
FIG. 18 is a schematic structural diagram of a stroller on which the chassis shown in FIG. 15 is assembled;
FIG. 19 is a schematic diagram of a partial structure of a wheel shown in FIG. 18 during flipping;
FIG. 20 is a schematic diagram of a sectional structure of the chassis shown in FIG. 15;
FIG. 21 is a schematic diagram of a wheel reversing structure on a chassis according to a second embodiment;
FIG. 22 is a schematic diagram showing FIG. 21 from another angle of view;
FIG. 23 is a schematic diagram for collapsing a stroller on which the chassis according to the second embodiment is assembled;
FIG. 24 is a schematic diagram for further collapsing the stroller shown in FIG. 23;
FIG. 25 is a schematic diagram of a collapsed state of the stroller shown in FIG. 24;
FIG. 26 is a schematic structural diagram of a brake unit on the chassis;
FIG. 27 is a schematic diagram showing FIG. 26 from another angle of view;
FIG. 28 is a schematic diagram of a partially sectional structure of the chassis;

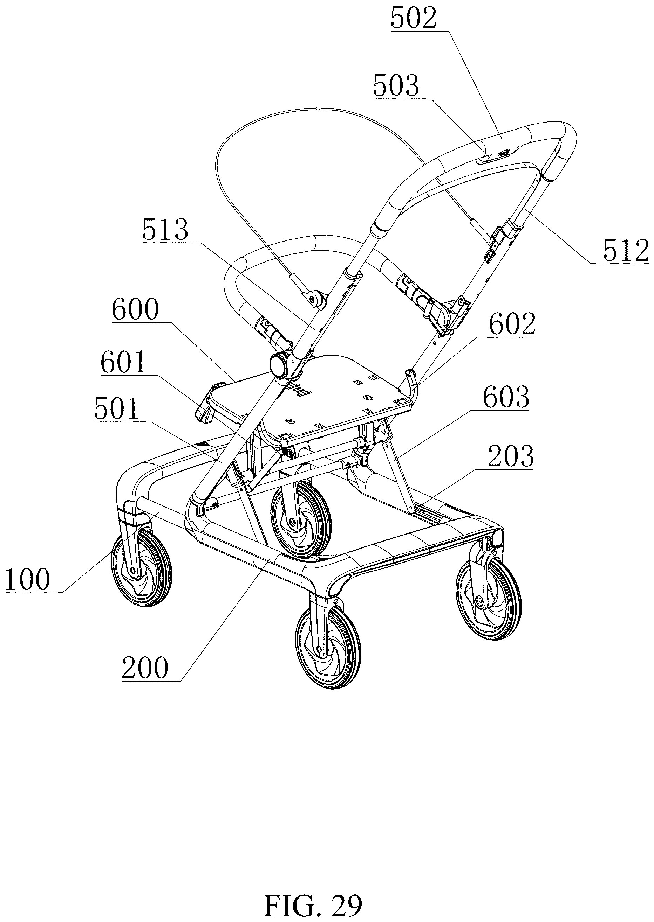

FIG. 29 is a schematic diagram of a three-dimensional structure of a stroller;

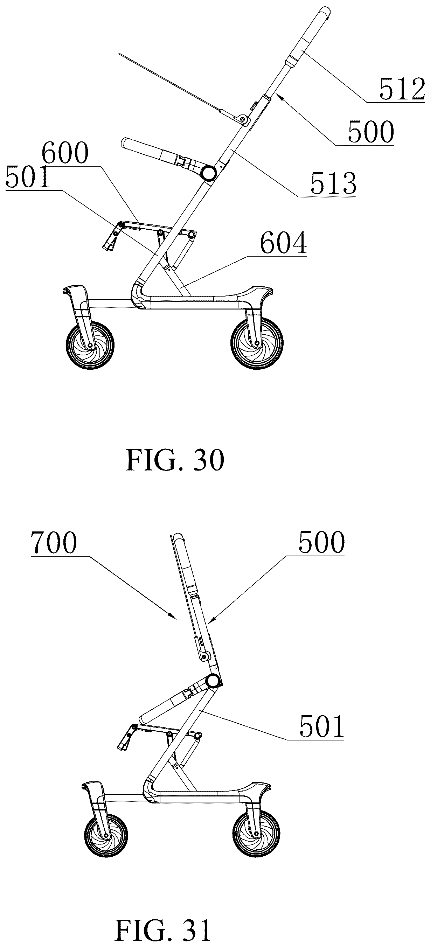

FIG. 30 is a schematic diagram of the stroller shown in FIG. 18 in a usage state;
FIG. 31 is a schematic digram of the stroller shown in FIG. 30 after flipping and collapsing;

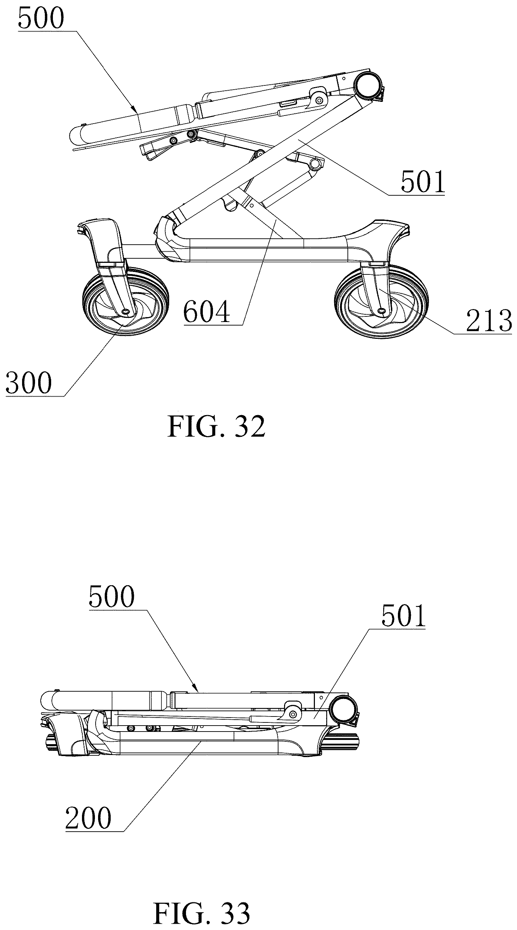

FIG. 32 is a schematic diagram for further collapsing the stroller shown in FIG. 31;
FIG. 33 is a schematic diagram of a final state of the collapsed stroller;
FIG. 34 is a schematic diagram of a sectional structure of the stroller shown in FIG. 29;
FIG. 35 is a schematic diagram of a sectional structure of a stroller assembly;
FIG. 36 is a schematic diagram of an exploded structure of a connection between a first push handle and a second push handle;
FIG. 37 is a schematic diagram showing FIG. 36 from another angle of view;
FIG. 38 is a schematic structural diagram of a stroller according to a fifth embodiment;
FIG. 39 is a schematic structural diagram of the stroller shown in FIG. 38 during a collapsing process;
FIG. 40 is a first schematic diagram of a three-dimensional structure of a diagonal bracing rod shown in FIG. 38;
FIG. 41 is a schematic diagram showing FIG. 40 from another angle of view;
FIG. 42 is a schematic diagram of an exploded structure of the diagonal bracing rod shown in FIG. 41;
FIG. 43 is a first schematic diagram of a sectional structure of the stroller shown in FIG. 40; and
FIG. 44 is a second schematic diagram of a sectional structure of the stroller shown in FIG. 40.

In these drawings, reference signs are as follows: 100, first support rod; 101, first trigger portion; 102, first reversing portion; 103, first slider; 104, second slider; 105, first rotation slot; 106, second rotation slot; 107, first insertion column; 108, second insertion column; 200, second support rod; 201, second reversing portion; 202, pull rod; 203, trigger block; 204, push rod; 205, adjustment slot; 206, transmission block; 207, force application rod; 208, transmission rod; 209, connecting portion; 210, hinged rod; 211, limiting slot; 212, limiting portion; 213, connecting frame; 214, restriction slot; 215, second trigger portion; 300, wheel; 301, brake block; 302, brake slot; 303, brake rod; 304, elastic reset member; 400, connecting rod; 401, brake pedal; 402, drive rod; 403, connecting slot; 500, first push handle; 501, second push handle; 502, connecting push handle; 503, unlocking button; 504, locking portion; 505, first locking slot; 506, locking slider; 507, second locking slot; 508, locking rope; 509, winding-up sliding chute; 510, spooling slider; 511, spooling latch hook; 512, holding push handle; 513, extension push handle; 514, locking hook; 515, locking slot; 516, locking piece; 600, seat; 601, first connecting rod; 602, second connecting rod; 603, third connecting rod; 604, diagonal bracing rod; 605, first upright rod; 606, second upright rod; 607, mounting column; 608, shock-absorbing elastic member; 609, abutting block; 700, push bar.

### DETAILED DESCRIPTION

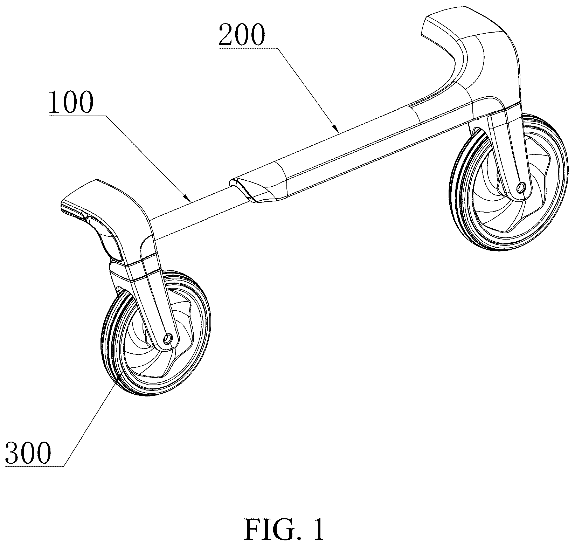

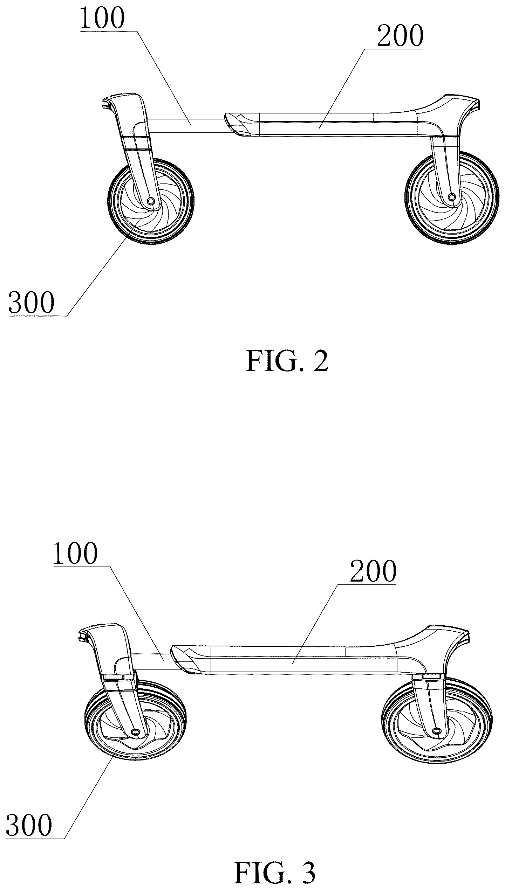

As shown in FIGS. 1 to 3, a foldable and collapsible module includes: a first support rod 100 and a second support rod 200, where the extension direction of the first support rod 100 and the extension direction of the second support rod 200 are arranged in parallel, and a length between the first support rod 100 and the second support rod 200 is adjustable; along the axial direction of the first support rod 100, the total length of the first support rod 100 and the second support rod 200 is adjustable; a first trigger portion 101 arranged on the second support rod 200; a second trigger portion 215 arranged on the first support rod 100; two wheels 300, the two wheels 300 being arranged on a first end of the first support rod 100 and a first end of the second support rod 200, respectively; a first reversing portion 102 arranged on the first support rod 100, where the first trigger portion 101 and the first reversing portion 102 are in transmission connection; and a second reversing portion 201 arranged on the second support rod 200, where the second trigger portion 215 and the second reversing portion 201 are in transmission connection, and the first reversing portion 102 and the second reversing portion 201 are both connected to the corresponding wheels 300.

As the length between the first support rod 100 and the second support rod 200 decreases, the first trigger portion 101 acts on the first reversing portion 102, and the second trigger portion 215 acts on the second reversing portion 201, such that the first reversing portion 102 and the second reversing portion 201 operate correspondingly, to switch the wheels 300 from an usage state to a collapsed state.

As the length between the first support rod 100 and the second support rod 200 increases, the first trigger portion 101 acts on the first reversing portion 102, and the second trigger portion 215 acts on the second reversing portion 201, such that the first reversing portion 102 and the second reversing portion 201 operate correspondingly, to switch the wheels 300 from the collapsed state to the usage state.

In this embodiment, the first support rod 100 and the second support rod 200 form a movable support member for a stroller or a further movable device. Moreover, the first support rod 100 and the second support rod 200 in the present application are collapsible or extendable relative to each other, i.e., showing different structural states during usage and idling. In particular, the first reversing portion 102 and the second reversing portion 201 are provided such that when the first support rod 100 and the second support rod 200 extend (i.e., entering a usage state), the wheels 300 on the first support rod 100 and the second support rod 200 enter an usage state, and the treads of the wheels 300 are abutted against the ground, thereby achieving movement by means of the wheels 300; and when the first support rod 100 and the second support rod 200 are collapsed relative to each other, the first trigger portion 101 acts on the first reversing portion 102, and the second trigger portion 215 acts on the second reversing portion 201, to correspondingly trigger the first reversing portion 102 and the second reversing portion 201 to operate, thereby switching the wheels 300 from the usage state to the collapsed state, such that a large footprint is reduced during idling. Meanwhile, the treads of the wheels 300 are prevented from contacting the ground or other holding surfaces, thereby avoiding shaking or shifting of the stroller or the further movable device. That is, the synchronous flipping and folding of the wheels 300 can be achieved during the process of collapsing the first support rod 100 and second support rod 200.

In this foldable and collapsible module, the first support rod 100 and the second support rod 200 are arranged coaxially, and the first support rod 100 is sleeved outside the second support rod 200. Such a sleeve-type structural design enables the two support rods slide relative to each other, thereby allows for the adjustment of the total length of the first support rod 100 and the second support rod 200. When the distance between the two support rods needs to be reduced, the first support rod 100 may be pushed towards the second support rod 200 in an axial direction to allow the two support rods to slide relative to each other, thereby reducing the overall length. Such a structural design simplifies a foldable mechanism and improves the convenience in use.

As shown in FIGS. 1 to 3, in a first implementation, the first trigger portion 101 includes a rotation slot, the first reversing portion 102 includes an insertion column fixed on the first support rod 100, and the insertion column extends into the rotation slot. The rotation slot is provided in the side surface of the second support rod 200; the insertion column is fixedly arranged on the first support rod 100; and the wheel 300 and the corresponding first support rod 100 are fixed to each other. When the first support rod 100 and the second support rod 200 slide relative to each other to reduce the distance, the insertion column moves under the guidance of the special shape of the rotation slot, to drive the wheels 300 to rotate, thereby switching the wheels 300 from the usage state to the collapsed state. Furthermore, when the first support rod 100 and the second support rod 200 slide relative to each other to increase the distance, the insertion column moves reversely in the rotation slot to drive the wheels 300 to reset. The rotation slot may be designed with an arc shape to facilitate the control over the rotation angle and direction of the wheels 300.

It is worth mentioning that the first support rod 100 extends into the second support rod 200, to allow for hiding the insertion column in the second support rod 200, thereby ensuring the aesthetical property while preventing foreign sundries entering the rotation slot and then affecting the sliding of the insertion column in the rotation slot.

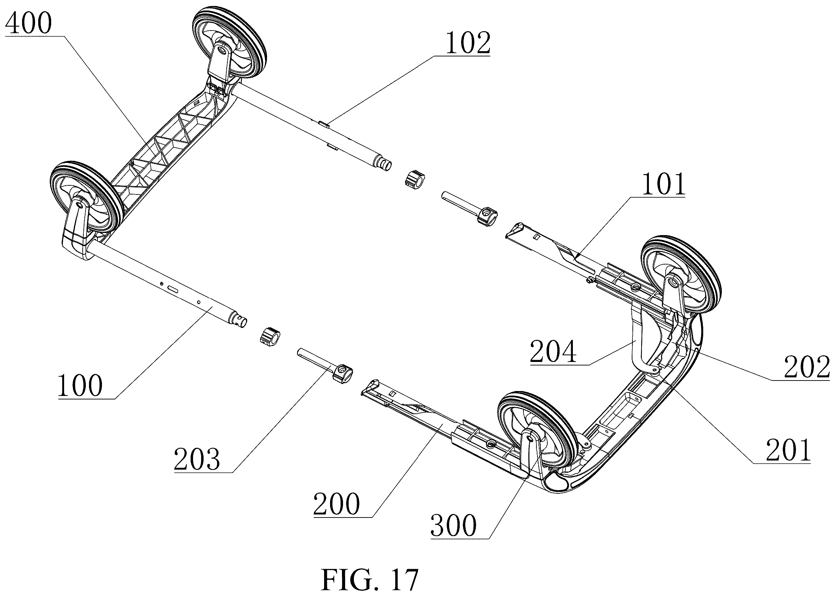

As shown in FIG. 17, to reverse the wheel 300 on the second support rod 200, the second reversing portion 201 includes a hinged block that is movable in a linear direction, and the linear movement direction of the hinged block is not in parallel with the axial direction of the second support rod 200. The hinged block and the second trigger portion 215 are in transmission connection there between, and when the second trigger portion 215 moves, the hinged block is pushed to move in a direction that is not parallel with the axis of the second support rod 200. The hinged block and the wheel 300 are hinged via a pull rod 202, and the wheel 300 is rotatable around the axis of the second support rod 200. When the hinged block moves, the wheel 300 is driven to rotate around the axis of the second support rod 200 by means of the connection of the pull rod 202, thereby enabling the collapsing of the wheel 300; and when the second trigger portion 215 moves reversely, the hinged block is driven to move reversely to gradually unfold the wheel 300 and enter its usage state.

Preferably, the linear movement direction of the hinged block is disposed perpendicular to the axial direction of the second support rod 200. During actual use, when the foldable and collapsible module needs to be switched from an usage state to the collapsed state, a user only needs to push the first support rod 100 to move towards the second support rod 200, whereby as the distance between the two support rod decreases, the rotation slot and the insertion column come into contact and interact, and the second trigger portion 215 simultaneously pushes the hinged block of the second reversing portion 201 to move, such that the hinged block drives the rotation of the wheels 300 by means of the pull rod 202. Such a linkage mechanism ensures the synchronous switching of the two wheels 300 from the usage state to the collapsed state, thereby greatly reducing the overall module size to facilitate storage and carrying.

When the foldable and collapsible module is collapsed, the entire module can be placed stably. When the usage state needs to be restored, as long as the first support rod 100 and the second support rod 200 are pulled apart to an appropriate distance, the trigger mechanism automatically resets, and the wheels 300 return to the usage state, enabling normal rolling. Such a design enables rapid switching of the foldable and collapsible module between the usage state and the collapsed state, greatly improving the convenience in use.

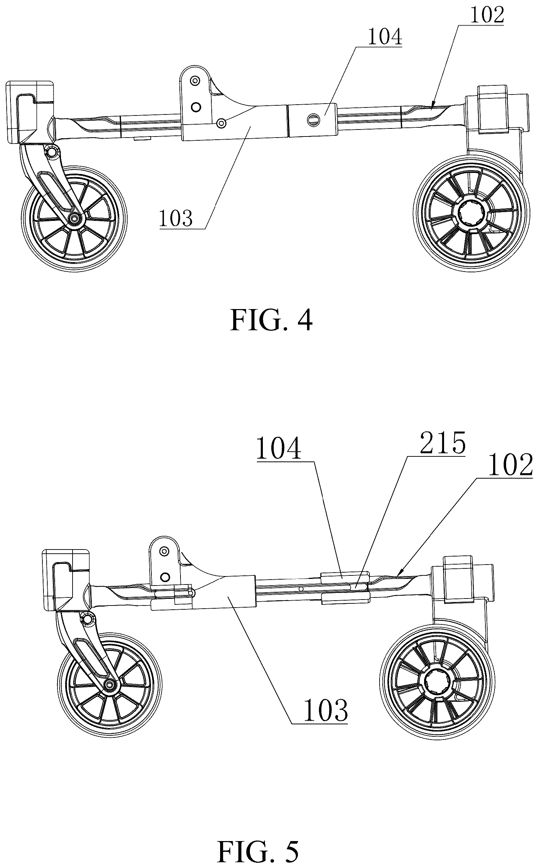

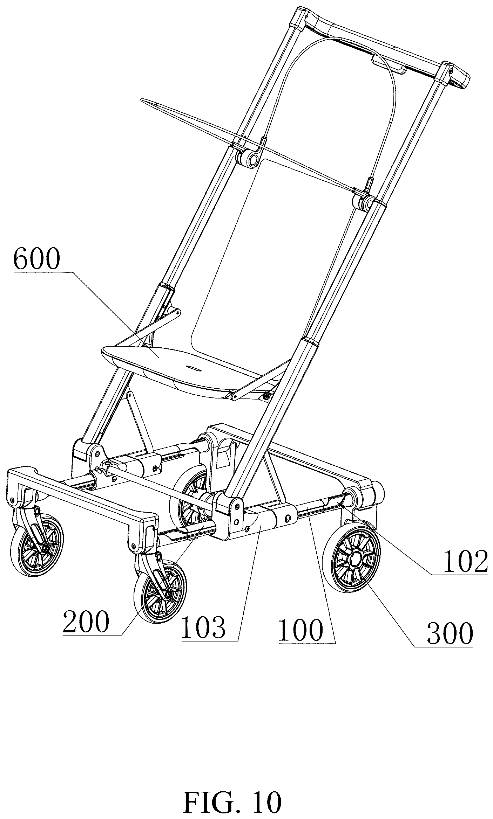

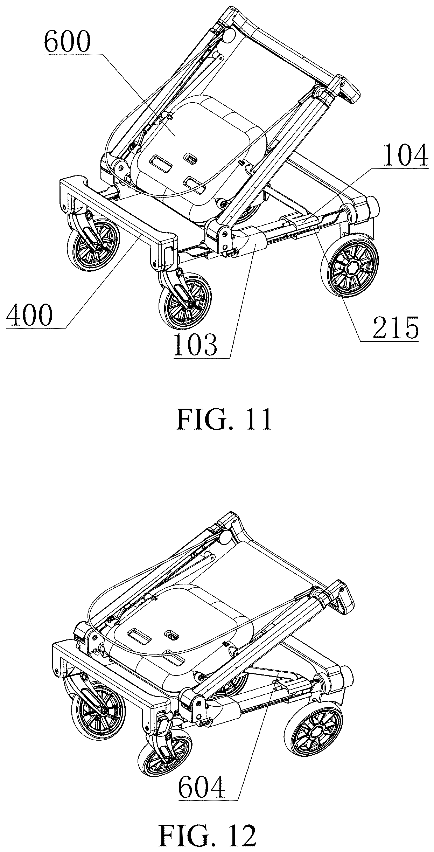

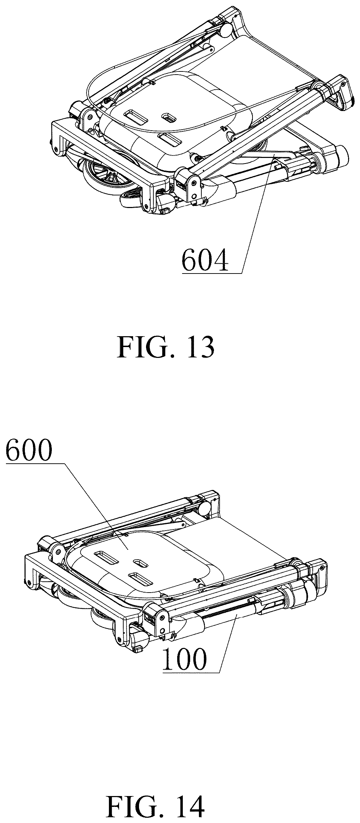

As shown in FIGS. 4 and 5 and 10 to 14, as a further second implementation, the first end of the first support rod 100 is provided with a first slider 103, the first end of the second support rod 200 is provided with a second slider 104, the first slider 103 and the second support rod 200 are in sliding fit, and the second slider 104 and the first support rod 100 are in sliding fit. The second end of the first support rod 100 and the second end of the first support rod 100 are each provided with a wheel 300.

The first reversing portion 102 is arranged on the side surface of the first support rod 100, and the second reversing portion 201 is arranged on the side surface of the second support rod 200.The first trigger portion 101 is arranged on the first slider 103, and the second trigger portion 215 is arranged on the second slider 104. The first reversing portion 102 may be connected to the second trigger portion 215, and the second reversing portion 201 may be connected to the first trigger portion 101.

During the process of switching the first support rod 100 and the second support rod 200 from the usage state to the collapsed state, the first reversing portion 102 and the second trigger portion 215 are connected, and the second reversing portion 201 and the first trigger portion 101 are connected, enabling reversing of the wheels 300.

Specifically, the first end of the first support rod 100 is provided with a first rotation slot 105 that is arranged radially; the firs tend of the second support rod 200 is provided with a second rotation slot 106 that is arranged radially; the first slider 103 is provided with a first insertion column 107; the second slider 104 is provided with a second insertion column 108; the first insertion column 107 extends into the second rotation slot 106; the second insertion column 108 extends into the first rotation slot 105; and the wheels 300 are fixedly connected to the first support rod 100 and the second support rod 200 correspondingly.

As shown in FIG. 4, the first support rod 100 is arranged around the side surface of the second support rod 200; or the first support rod 100 and the second support rod 200 are arranged coaxially.

Specifically, the first reversing portion 102 includes a reversing slot arranged around the first support rod 100; the second trigger portion 215 includes a linkage column that is arranged on the second support rod 200 and extends into the reversing slot; and the linkage column is movable along the trajectory of the reversing slot. When the linkage column is positioned at one end of the reversing slot, the axes of the wheels 300 are parallel to the horizontal direction; and when the linkage column is positioned at the other end of the reversing slot, the axes of the wheels 300 are parallel to the vertical direction.

In this embodiment, the first end of the first support rod 100 is fixedly provided with the first slider 103; the first slider 103 is provided with the linkage column; and the reversing slot is arranged on the side surface of the first support rod 100. The structure of the second reversing portion 201 is the same as that of the first reversing portion 102. That is, the first end of the second support rod 200 is fixedly provided with a second slider 104; the second slider 104 is also provided with a linkage column; a reversing slot is also arranged on the side surface of the second support rod 200. In this way, the linkage column on the first slider 103 extends into the reversing slot in the second support rod 200; the linkage column on the second slider 104 extends into the reversing slot in the first support rod 100; the linkage column on the first slider 103 moves along with the trajectory of the reversing slot, such that the second support rod 200 rotates to drive the corresponding wheel 300 to flip to the horizontal direction; and the linkage column on the second slider 104 moves along with the trajectory of the reversing slot, such that the first support rod 100 rotates to drive the corresponding wheel to flip to the horizontal direction.

It should be noted that when the first support rod 100 and the second support rod 200 are changed from the usage state to the collapsed state, the wheel 300 on the first support rod 100 and the wheel 300 on the second support rod 200 are flipped synchronously or asynchronously.

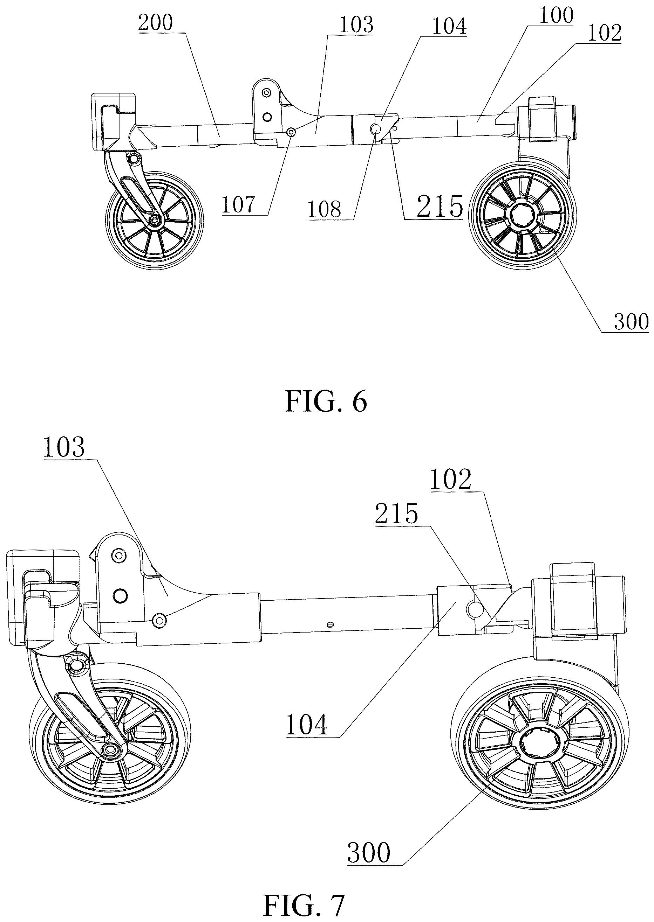

As shown in FIGS. 6 and 7, as a third implementation, it is the same as the aforementioned second implementation in structure, only except that: the first reversing portion 102 includes reversing inclined planes that are arranged on the second end of the first support rod 100; the second trigger portion 215 includes force-application inclined planes that are arranged on the end of the first slider 103; and as the reversing inclined planes and the force-application inclined planes approach each other, the force-application inclined planes and the reversing inclined planes are abutted against each other to causing the wheels 300 on the first support rod 100 and the second support rod 200 to gradually come into usage state.

In this embodiment, there is provided a further reversing structure for the wheels 300, in which the tip of the second end of the first support rod 100 is provided with the reversing inclined planes; the end of the first slider 103 is provided with the force-application inclined planes; and the force-application inclined planes and the reversing inclined planes are arranged opposite to each other. Moreover, in the present application, the force-application inclined planes and the reversing inclined planes are abutted against each other only when the first slider 103 moves to approach the end of the second support rod 200, such that the reversing inclined planes rotate to drive the reversing of the wheels 300.

It is worth mentioning that the number of the force-application inclined planes is two, which are arranged on the side surface of the first support rod 100 at intervals, and the reversing inclined planes and the force-application inclined planes are in one-to-one correspondence in terms of number and position.

As a further fourth implantation, it differs from the aforementioned two implementations in that: the first support rod 100 is provided with a linkage column, the second support rod 200 is provided with a reversing slot, and the linkage column extends into the reversing slot; and the second support rod 200 is provided with force-application inclined planes, and the first support rod 100 is provided with reversing inclined planes.

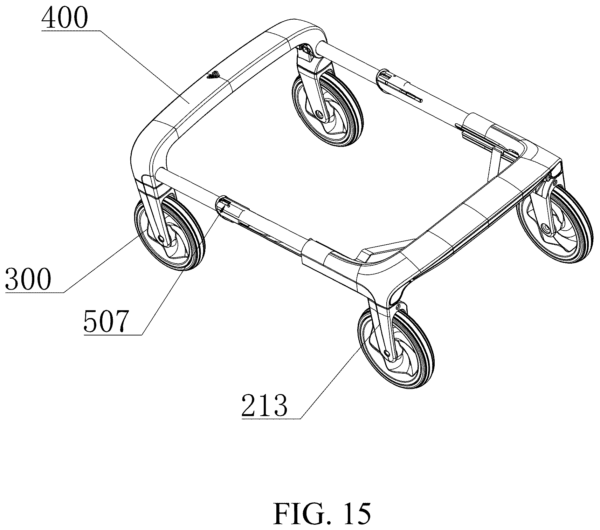

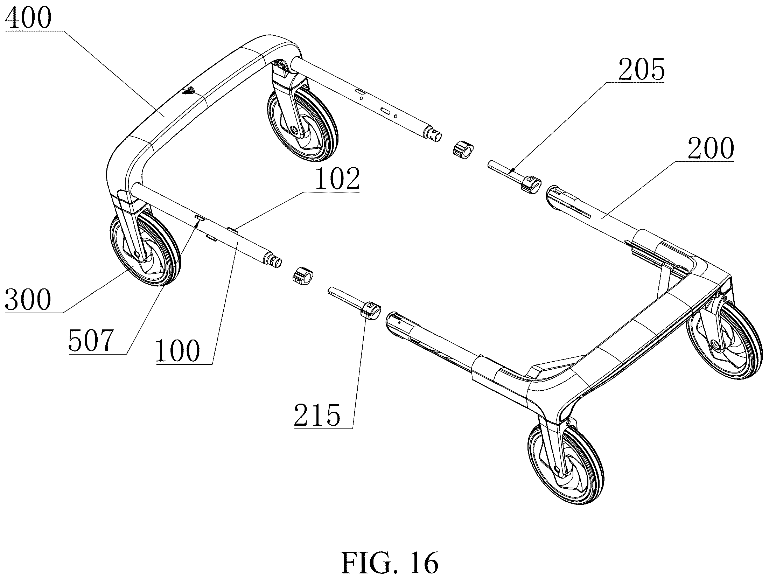

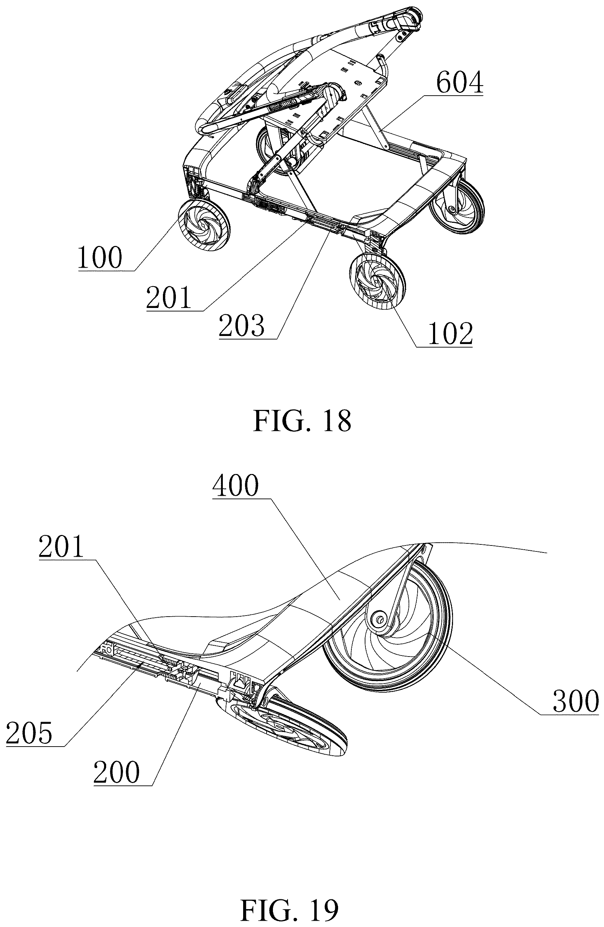

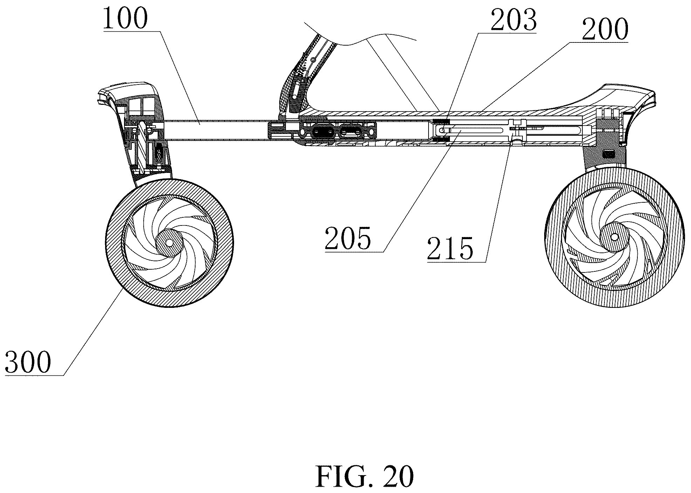

As shown in FIGS. 15 to 20, in a first embodiment, a chassis includes two foldable and collapsible modules described in the aforementioned first implementation, and further includes two connecting rods 400 connecting the two foldable and collapsible modules; wherein one of the connecting rods 400 has its two ends respectively connected to the first support rod 100 of each of the two foldable and collapsible modules, and the other connecting rod 400 has its two ends respectively connected to the second support rod 200 of each of the two foldable and collapsible modules. The connecting rods 400 are designed such that the whole chassis achieves a firmer structure and can withstand a larger load. When the chassis needs to be collapsed, the four wheels 300 may be synchronously flipped inwards and collapsed as long as the first support rods 100 and the second support rods 200 are pushed to move relatively, such that the overall size of the chassis is greatly reduced to facilitate storage and transportation.

As the length between the first support rods 100 and the second support rods 200 decreases, the wheels 300 on the first support rods 100 and the wheels 300 on the second support rods 200 are both flipped inwards to collapse. Such an inward flipping design prevents the collapsed wheels 300 from protruding out of the chassis, greatly reducing the collapsed footprint and improving the efficiency of storage and transportation.

More further, each of the second trigger portions 215 is defined to include a trigger rod arranged on an end of the corresponding first support rod 100, the trigger rod is slidable along the axial direction of the second support rod 200, and the trigger rod and the corresponding hinged block are hinged to each other via a push rod 204. Such a transmission structure enables the trigger rods to drive the movement of the hinged blocks when the first support rods 100 and the second support rods 200 move relative to each other, thereby controlling the state of the wheels 300 to change accordingly.

In the aforementioned embodiment, as the total length of the first support rods 100 and the second support rods 200 change, the trigger rods arranged on the ends of the first support rods 100 can move relative to the second support rods 200 to in turn apply a force to the hinged blocks and allow the hinged blocks to move linearly, thereby pulling and causing the wheels 300 to flip, such that when the first support rods 100 and the second support rods 200 are collapsed or unfolded relatively, the wheels 300 on the first support rods 100 and the second support rods 200 automatically rotate therewith.

Each of the trigger rods is provided with an adjustment slot 205 extending in a linear direction, and an end of the corresponding first support rod 100 is provided with a trigger block 203 that extends into the adjustment slot 205, and the first support rod 100 and the trigger block 203 remain fixed in relative position but are rotatable relative to each other. The adjustment slot 205 is designed to ensure the stable connection between the second trigger portion 215 and the trigger rod, while allowing for reserving an adjustment space during the process of triggering, thereby increasing the flexibility and reliability of this mechanism. That is, when the first support rod 100 is collapsed relative to the second support rod 200, the trigger block 203 slides first in the adjustment slot 205, and is then abutted against the wall of the adjustment slot 205 to in turn push the trigger rod to move.

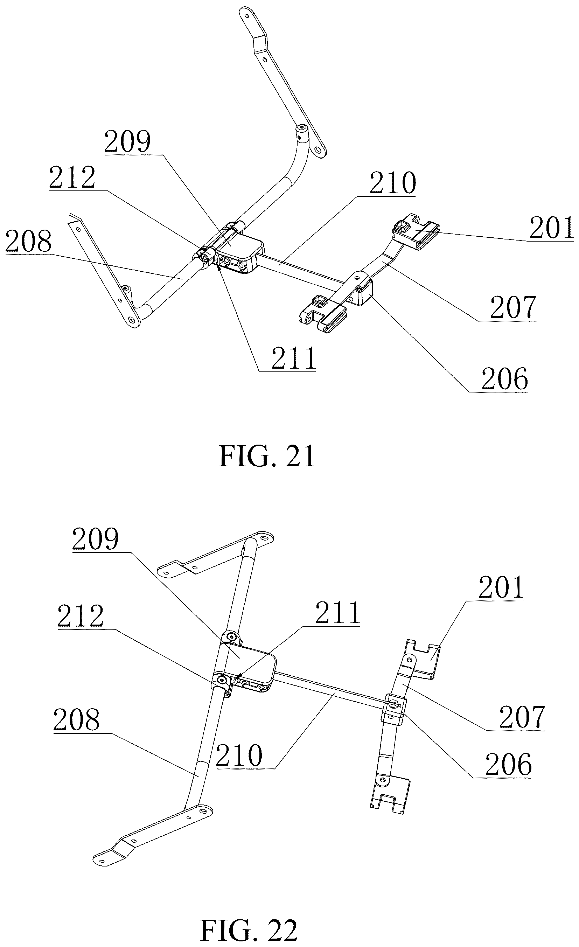

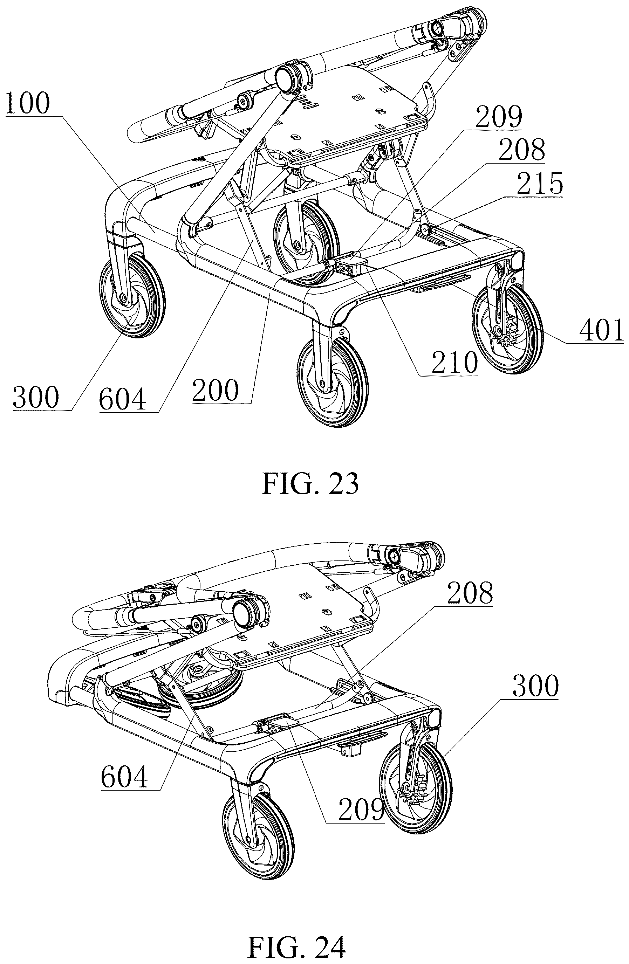

As shown in FIGS. 21 to 25, a second embodiment is the same as the first embodiment in structure, except that: a transmission block 206 is arranged between the two second support rods 200; two force application rods 207 are hinged to both sides of the transmission block 206, respectively; the force application rods 207 and the corresponding hinged blocks are hinged; the transmission block 206 is movable in the axial direction of the second support rods 200; and the second trigger portions 215 are in transmission connection with the transmission block 206. Such a transmission structural design enables synchronous collapsing of the wheels 300 on either side, ensuring the balance and stability of the chassis.

Specifically, the two second trigger portions 215 are fixed to each other via a transmission rod 208; the transmission rod 208 is rotationally provided with a connecting portion 209; and a hinged rod 210 is arranged between the connecting portion 209 and the transmission block 206 for transmission. The hinged rod 210 and the hinged block are hinged, and the hinged rod 210 and the connecting portion 209 may be selectively hinged or fixedly connected to each other. In such a connection manner, when the second trigger portion 215 on one side is triggered, the second trigger portion 215 on the other side moves synchronously, thereby ensuring the concerted collapsing of the wheels 300 on both sides.

The connecting portion 209 and the transmission rod 208 are in rotational connection there between; the connecting portion 209 is provided with a limiting slot 211 which is arc-shaped; the transmission rod 208 is fixedly provided with a limiting portion 212; the limiting portion 212 extends into the limiting slot 211; and the limiting portion 212 is abuttable against the limiting slot 211.An adjustment space is allowed to be reserved during the process of triggering. That is, when the first support rods 100 are collapsed relative to the second support rods 200, the limiting portion 212 first slides inside the limiting slot 211 without applying a force to the limiting slot 211; and when the limiting portion 212 is abutted against the wall of the limiting slot 211, the rotation of the limiting portion 212 drives the operation of the connecting portion 209, such that when the first support rods 100 and the second support rods 200 are collapsed relatively, the wheels 300 first remain in the usage state, and when the limiting portion 212 is abutted against the wall of the limiting slot 211, the wheels 300 are gradually collapsed.

It is worth mentioning that the transmission rod 208 may be connected to the first support rods 100, such that when the strokes of the first support rods 100 and the second support rods 200 are adjusted, the first support rods 100 apply a force to the transmission rod 208.

In a third embodiment, a chassis includes two foldable and collapsible modules as described in the aforementioned second, third and fourth implementations.

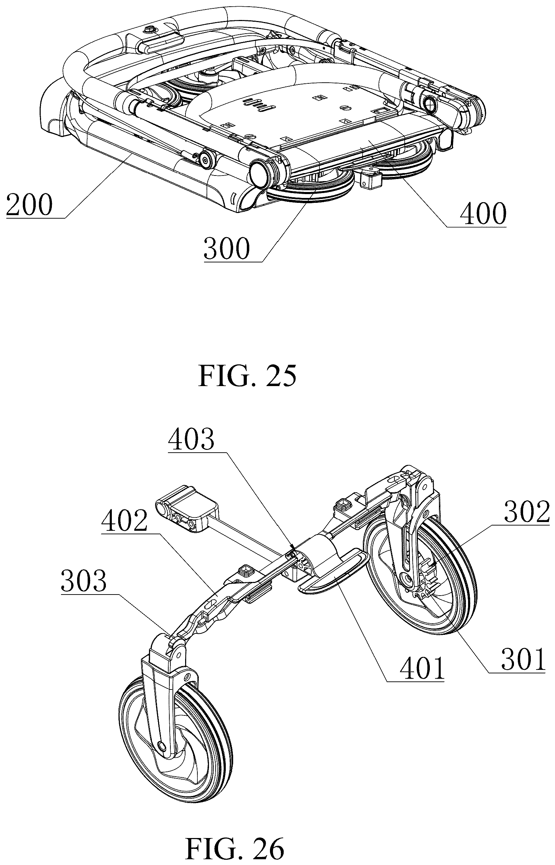

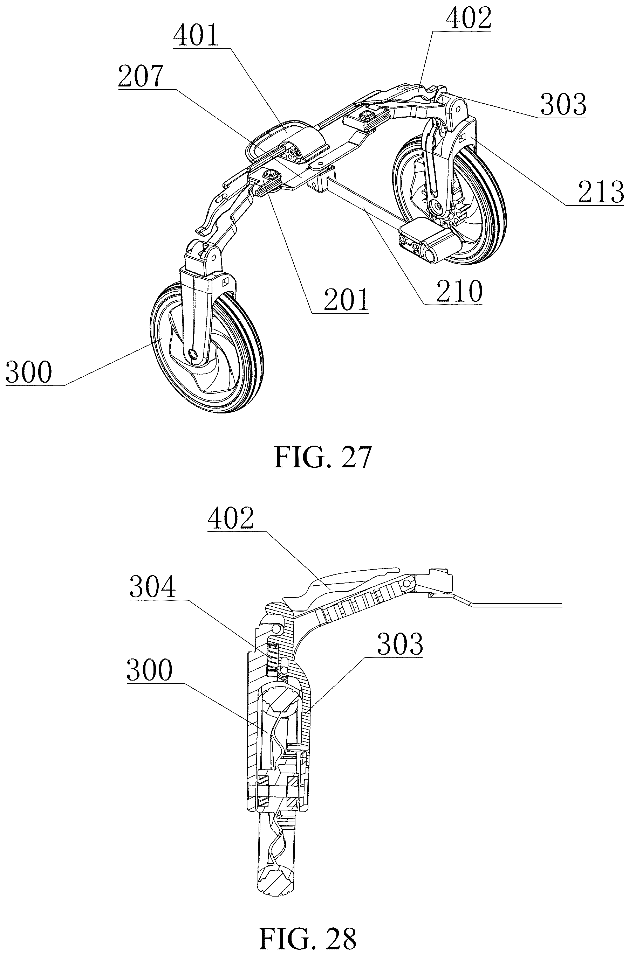

As shown in FIGS. 25 to 28, further preferably, based on the aforementioned three embodiments, one or two of the connecting rods 400 are each provided with brake pedals 401 that are rotatable relative to each other, and the wheels 300 are each fixedly provided with a brake block 301. Around the rolling axis of each of the wheels 300, a plurality of brake slots 302 are arranged on the brake block 301 at intervals in a circular pattern to form a selective limiting structure, and a brake rod 303 is arranged on the wheel 300 and is movable vertically relative to the rolling axis of the wheel 300. The brake rod 303 and the brake slots 302 coordinate to act only on the circumferential degree of freedom of the wheel 300, without affecting the flipping movement of the wheel 300 around the axis of the support rod (i.e., the usage/collapsed state switching), such that the brake rod and the brake slots are decoupled in movement to achieve independent and compatible functions. The brake rod 303 and the brake pedals 401 are in transmission connection, and when a user pedals down the brake pedals 401, the rotation of the pedals is converted into the linear movement of the brake rod 303 via a transmission mechanism, such that the end of the brake rod is precisely inserted into the currently aligned brake slot 302, thereby limiting the rotation of the wheels 300 to enable rapid locking. By adding a safe braking function to the foldable and collapsible module in the unfolded usage state, the operational safety of the device is significantly increased in scenarios such as parking on a ramp, loaded transportation or frequent stopping/starting operations.

Each of the connecting rods 400 is provided with a linearly movable drive rod 402; the drive rod 402 has one end abutted against an end of the brake rod 303; each of the brake pedals 401 is provided with a connecting slot 403; a transmission inclined plane is arranged inside the connecting slot 403; the transmission inclined plane is abutted against the other end of the drive rod 402. This contributes to a mechanical boosted transmission mechanism based on the principle of pushing on an inclined plane. When a user pedals down the brake pedals 401, the pedals rotate around their rotation axial to drive the synchronous rotation of the transmission inclined plane in the connecting slot 403, and the inclined plane contacts and applies a normal force to the drive rod 402, converting the rotational movement into the transverse sliding movement of the drive rod 402 in the linear direction; and the drive rod 402 moves laterally under the action of a pushing force to further push the brake rod 303 to be vertically inserted into the brake slot 302 in the wheel 300, enabling the locking brake of the wheel 300.

The dip angle of the transmission inclined plane is reasonably designed to enable a self-locking function, i.e., maintaining a braking state of the mechanism without automatic reset after pedaling, such that the parking safety is improved and the braking is released only by manual release or reversed pedaling.

The end of each of the second support rods 200 is provided with a connecting frame 213 via hinging, and the corresponding wheel 300 is arranged on the connecting frame 213. The connecting frame 213 is provided with a limiting portion 212; the brake rod 303 is provided with a restriction slot 214 extending in a linear direction; the limiting portion 212 extends into the restriction slot 214; and an elastic reset member 304 is arranged between the connecting frame 213 and the brake rod 303. Such a design enables the elastic reset member 304 to automatically pull the brake rod 303 back to its original position after the brake pedal 401 is released, thereby releasing the braking state, and meanwhile, the limiting structure ensures the stability and controllability of the movement trajectory of the brake rod 303.

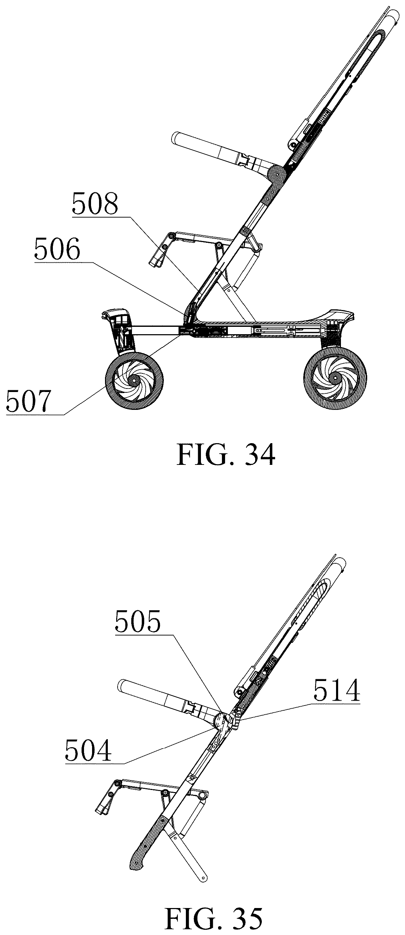

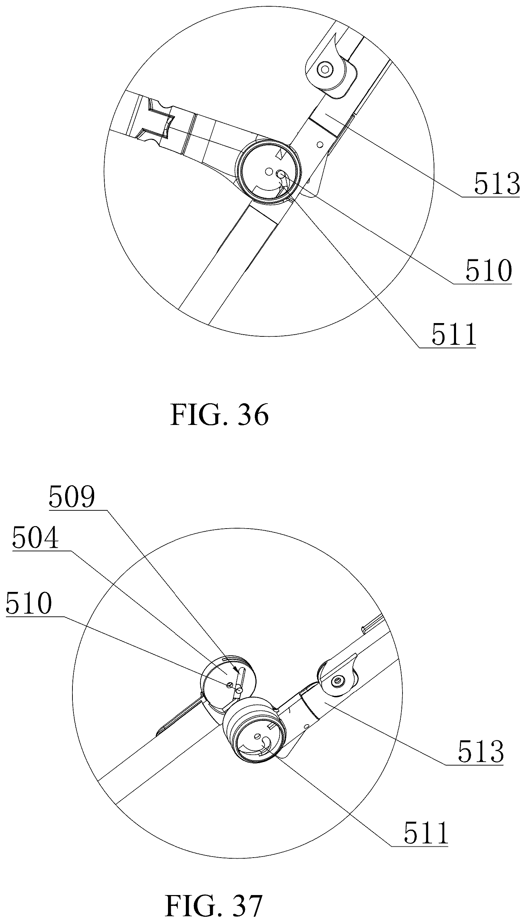

As shown in FIGS. 34 to 37, in a fourth embodiment a stroller frame includes the chassis according to all the aforementioned embodiments, and further includes a stroller assembly. The stroller assembly includes two push bars (700) that operate synchronously, and the two push bars (700) are hinged to the corresponding second support rods 200, respectively. A diagonal bracing rod 604 is hinged on each of the second trigger portions 215 and is hinged to the corresponding push bar (700); and when the first support rod 100 and the second support rod 200 are extended, a triangle is formed among axes of the push bar (700), the diagonal bracing rod 604 and the first support rod 100. Such a triangular structural design provides higher stability and bearing capacity, and prevents the stroller frame from deformation or inclination during usage.

Specifically, in the aforementioned first embodiment, the diagonal bracing rod 604 and the trigger block 203 are hinged to each other. In the aforementioned second embodiment, the diagonal bracing rod 604 and the second trigger portion 215 are hinged to each other.

Each of the push bars (700) includes a first push handle 500 and a second push handle 501; the two first push handles 500 are fixed via a connecting push handle 502 there between; the second push handles 501 and the second support rods 200 are hinged; and the first push handles 500 and the second push handles 501 are rotationally connected to each other. The first push handle 500 and the second push handle 501 are provided with a first locking member there between, and the second push handle 501 and the second support rod 200 are provided with a second the locking member there between. Such a dual locking design ensures the stability of the stroller assembly during usage while facilitating folding and storage.

The connecting push handle 502 is provided with an unlocking button 503; the first locking member includes a locking hook 514 that is hinged inside the first push handle 500; the second push handle 501 is fixedly provided with a locking portion 504; the locking portion 504 is provided with a first locking slot 505; and the locking hook 514 is lockable with the first locking slot 505. Such a locking mechanism has a simple and reliable design, is convenient to operate, and can keep a stable connection between the first push handle 500 and the second push handle 501 in a usage state.

The second push handle 501 is provided with a locking slider 506; the first support rod 100 is provided with a second locking slot 507; the locking slider 506 is extendable into the second locking slot 507, enabling relative locking between the first support rod 100 and the second support rod 200; and the locking slider 506 and the first push handle 500 are connected via a locking rope 508 there between. As the first push handle 500 rotates relative to the second push handle 501, the first push handle 500 pulls the locking rope 508 to drive the locking slider 506 to move out of the second locking slot 507. In this way, relative movement is enabled between the first support rod 100 and the second support rod 200, and such a linked unlocking design enables the user to simultaneously release two locks with a single operation, which improves the convenience of the folding operation.

Specifically, the locking portion 504 is provided with a take-up sliding chute 509 extending in a linear direction; the take-up sliding chute 509 is arranged inclined with respect to the extension direction of the second push handle 501; a slidable take-up slider 510 is arranged in the take-up sliding chute 509; the take-up slider 510 is fixed to one end of the locking rope 508; the first push handle 500 is provided with a take-up latch hook 511; and one end of the take-up slider 510 is hooked with the take-up latch hook 511. As the second push handle 501 rotates relative to the first push handle 500, the take-up latch hook 511 drives the take-up slider 510 to move along the take-up sliding chute 509, thereby driving the locking rope 508 to pull the locking slider 506.

Specifically, the first push handle 500 includes a holding push handle 512 and an extension push handle 513; the extension push handle 513 and the second push handle 501 are in rotational connection; the holding push handle 512 is inserted in the extension push handle 513; the unlocking button 503 is arranged on the holding push handle 512; and the holding push handle 512 and the extension push handle 513 are in locked connection. As the unlocking button 503 is pressed down, the holding push handle 512 extends into the extension push handle 513, the holding push handle 512 strikes the locking hook 514, to cause the locking hook 514 to rotate relative to the extension push handle 513, thereby locking and unlocking the extension push handle 513 and the second push handle 501.

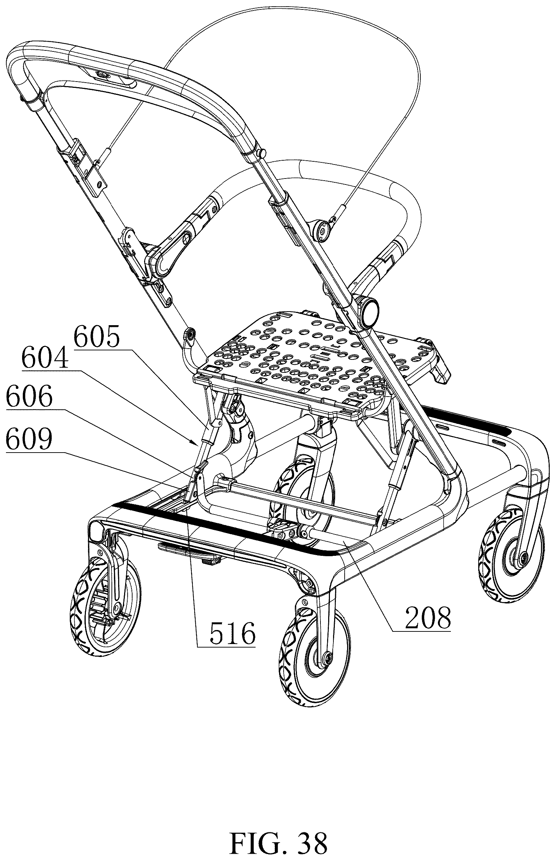

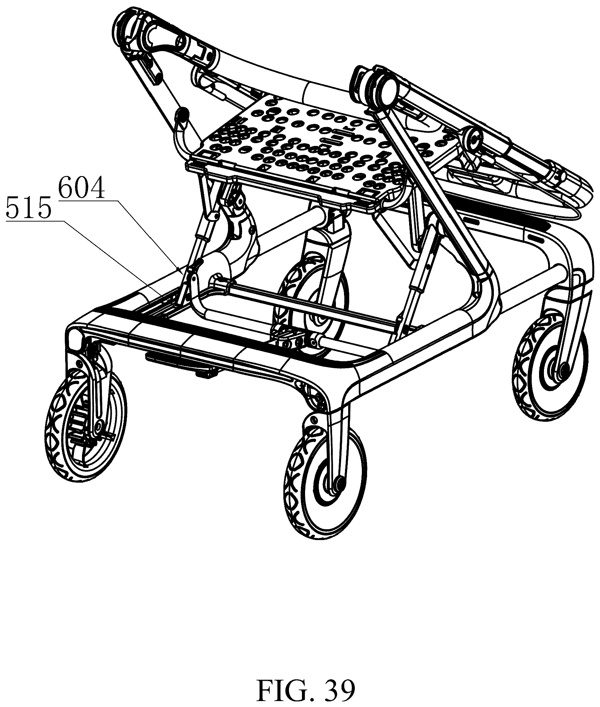

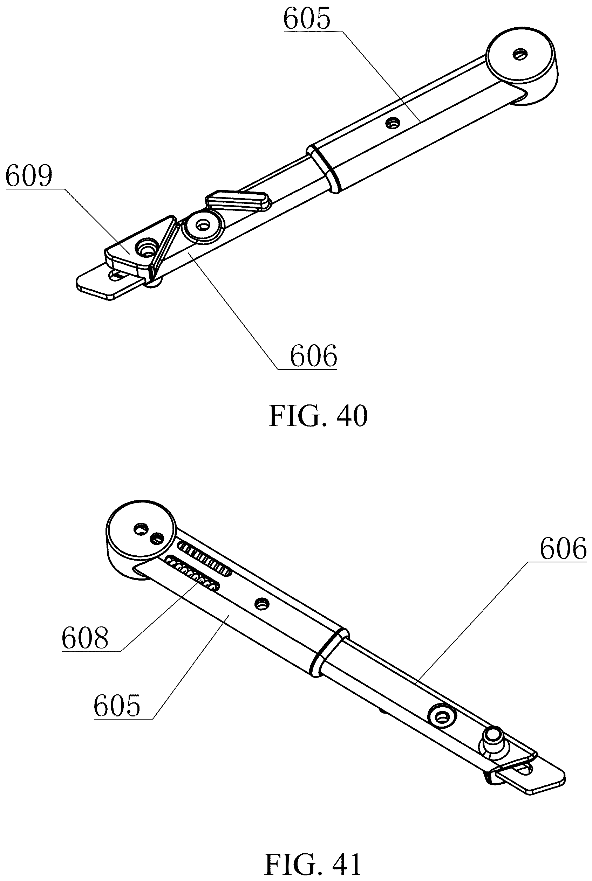

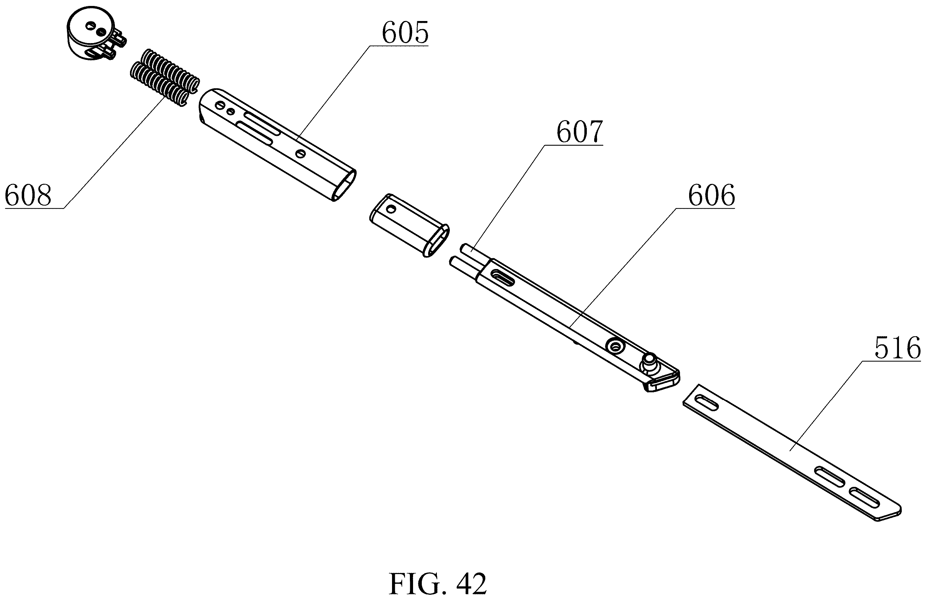

As shown in FIGS. 38 to 44, a fifth embodiment is the same as the fourth embodiment in structure, except that: each of the diagonal bracing rods 604 includes a first upright rod 605 and a second upright rod 606 that are sleeved with each other and are slidable; the first upright rod 605 and the second push handle 501 are hinged; the second upright rod 606 and the first support rod 100 are hinged; a shock-absorbing elastic member 608 is abutted between the first upright rod 605 and the second upright rod 606; and the diagonal bracing rods 604 serve to connect a seat 600.

Specifically, the second upright rod 606 is inserted into the first upright rod 605; the second upright rod 606 is provided with a mounting column 607; the shock-absorbing elastic member 608 includes a shock-absorbing spring sleeved on the mounting column; and both ends of the shock-absorbing spring are abutted against the end of the second upright rod 606 and the wall of an inner cavity of the first upright rod 605. With the arrangement of the shock-absorbing elastic member 608 inside the diagonal bracing rod 604, this embodiment effectively improves the damping performance of the connection structure of the seat and the riding comfort of the seat. When the seat 600 undergoes vertical vibrations or impact loads, the shock-absorbing elastic member 608 can absorb and dissipate part of the energy, thereby significantly reducing the amplitude of the vibration transmitted to the stroller body or the support framework. Furthermore, this shock-absorbing structure is integrated inside the diagonal bracing rod 604, without additional occupation of the outer space, facilitating a compact overall layout and a minimalist-style appearance for the stroller.

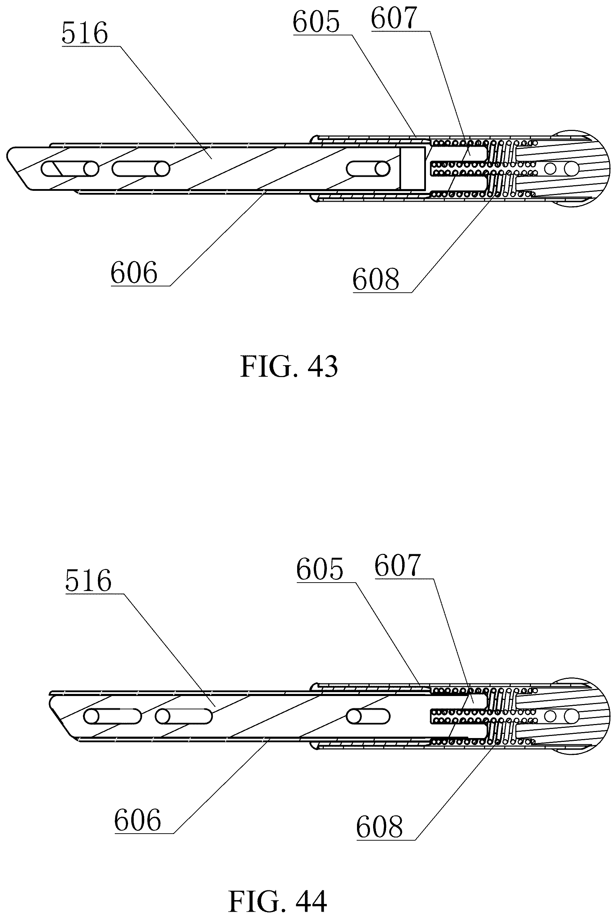

The second locking member includes a locking slot 515 arranged on the second support rod 200; the second upright rod 606 is provided with a locking piece 516 that is slidable relatively; the locking piece 516 can be inserted into the locking slot 515; and the locking piece 516 and the locking rope 508 are connected. As shown in FIG. 43, when the stroller frame is unfolded, the locking piece 516 penetrates out of the second upright rod 606 to extend into the locking slot 515. As shown in FIG. 44, when the stroller frame is collapsed, the locking rope 508 drives the locking piece 516 to retract into the second upright rod 606, thereby pulling the locking piece out of the locking slot 515 to release the interlocking there between.

It is worth mentioning that the diagonal bracing rod 604 is provided with two abutting blocks 609, each of which includes an abutting surface that is abuttable against the transmission rod 208 to limit its extreme rotation angle.

It should be noted that the end of each of the connecting rods is provided with a gear sleeve; a locking gear is arranged in the corresponding first support rod; and the locking gear may move linearly only in the axial direction of the first support rod. When the stroller frame is unfolded, the locking gear and the gear sleeve are meshed; and when the stroller frame is collapsed, the locking gear is disengaged from the gear sleeve.

A stroller includes the stroller frame according to all of the aforementioned embodiments, and further includes a seat 600. A middle portion of the seat 600 is connected to the diagonal bracing rods 604 via first connecting rods 601 there between; one end of the seat 600 is hinged to the push bars (700) via second connecting rods 602 there between; and one end of the seat 600 is hinged to the diagonal bracing rods 604 via third connecting rods 603 there between. Such a multi-point connection design enables the seat 600 to move concertedly along with the folding operation of the stroller, thereby preventing the occurrence of interference or jamming during the process of folding.

When the push bar (700) is folded and collapsed relative to the second support rod 200, the seat 600 flips relatively therewith, the three connecting rods act cooperatively to enable the seat 600 to be flipped and folded stably, ultimately forming a compact entirety with the folded stroller frame.

In a preferred embodiment, the first connecting rod 601, the second connecting rod 602 and the third connecting rod 603 are all made of a lightweight high-strength material, such that the overall weight is reduced while ensuring sufficient strength. The hinged points of the connecting rods are each provided with an anti-loosing device to ensure a good connection state even after prolonged usage.

The seat 600 is made of a fabric with good air permeability and is filled with sponge with proper hardness, providing a comfortable riding experience. The seat 600 is designed with a rounded-corner edge to avoid causing discomfort to a passenger. Reinforcing ribs are arranged at the bottom of the seat 600 to enhance the overall structural strength and prevent deformation after long-term usage.

The seat 600 perfects matches the folding mechanism of the stroller. When a user needs to fold the stroller, there is no need to operate the seat 600 separately, and the seat 600 can be automatically flipped and folded as long as the push bar (700) is folded according to a conventional method. This greatly simplifies the folding operation and improves the user experience. Meanwhile, the folded seat 600 and the stroller frame are compactly integrated, which reduces the footprint and facilitates the storage and transportation.

When the stroller is unfolded, the seat 600 is automatically unfolded to a usage position, without additional adjustment. The design of the three connecting rods ensures the stability of the seat 600 in a usage state, and prevents deformation or shaking even in the case of a heavy load. This stability is critical for the safety and comfort of the passenger.

## Claims

1. A foldable and collapsible module, comprising:
a first support rod (100) and a second support rod (200), wherein an extension direction of the first support rod (100) and an extension direction of the second support rod (200) are arranged in parallel, and a length between the first support rod (100) and the second support rod (200) is adjustable; along the axial direction of the first support rod (100), the total length of the first support rod (100) and the second support rod (200) is adjustable;
a first trigger portion (101) arranged on the second support rod (200); a second trigger portion (215) arranged on the first support rod (100);
two wheels (300), wherein the two wheels (300) are arranged on a first end of the first support rod (100) and a first end of the second support rod (200), respectively;
a first reversing portion (102) arranged on the first support rod (100), wherein the first trigger portion (101) and the first reversing portion (102) are in transmission connection; and a second reversing portion (201) arranged on the second support rod (200), wherein the second trigger portion (215) and the second reversing portion (201) are in transmission connection, and the first reversing portion (102) and the second reversing portion (201) are both connected to the corresponding wheels (300);
as the length between the first support rod (100) and the second support rod (200) decreases, the first trigger portion (101) acts on the first reversing portion (102), and the second trigger portion (215) acts on the second reversing portion (201), such that the first reversing portion (102) and the second reversing portion (201) operate correspondingly, to switch the wheels (300) from an usage state to a collapsed state; and
as the length between the first support rod (100) and the second support rod (200) increases, the first trigger portion (101) acts on the first reversing portion (102), and the second trigger portion (215) acts on the second reversing portion (201), such that the first reversing portion (102) and the second reversing portion (201) operate correspondingly, to switch the wheels (300) from the collapsed state to the usage state.

2. The foldable and collapsible module according to claim 1, wherein the first trigger portion (101) comprises a rotation slot, the first reversing portion (102) comprises an insertion column, and the insertion column extends into the rotation slot and is movable along a trajectory of the rotation slot; or the first trigger portion (101) comprises an insertion column, the first reversing portion (102) comprises a rotation slot, and the wheel (300) and the corresponding first support rod (100) are fixed to each other.

3. The foldable and collapsible module according to claim 1, wherein the first reversing portion (102) comprises an reversing inclined plane arranged on an end of the first support rod (100); the first trigger portion (101) comprises a force-application inclined plane arranged on an end of the second support rod (200); the wheel (300) and first support rod (100) are fixed to each other; and as the reversing inclined plane and the force-application inclined plane approach each other, the force-application inclined plane and the reversing inclined plane are abutted against each other to drive the wheel (300) on the first support rod (100) to collapse.

4. The foldable and collapsible module according to claim 1, wherein the second reversing portion (201) comprises a hinged block moving in a linear direction; a linear movement direction of the hinged block is not in parallel with an axial direction of the second support rod (200); the hinged block and the second trigger portion (215) are in transmission connection; the hinged block and the wheel (300) are hinged to each other via a pull rod (202); and the corresponding wheel (300) is rotatable around the axial of the second support rod (200).

5. A chassis, comprising:
two foldable and collapsible modules according to claim 1; and
two connecting rods (400) connecting the two foldable and collapsible modules; wherein one of the connecting rods (400) has its two ends respectively connected to the first support rod (100) of each of the two foldable and collapsible modules, and the other connecting rod (400) has its two ends respectively connected to the second support rod (200) of each of the two foldable and collapsible modules.

6. The chassis according to claim 5, wherein each of the second trigger portions (215) comprises a trigger rod arranged on an end of the corresponding first support rod (100), the trigger rod is slidable along the axial direction of the second support rod (200), and the trigger rod and the corresponding hinged block are hinged to each other via a push rod (204); the trigger rod is provided with an adjustment slot (205) extending in an axial direction, and an end of the corresponding first support rod (100) is fixedly provided with a trigger block (203) that extends into the adjustment slot (205).

7. The chassis according to claim 5, wherein a transmission block (206) is arranged between the two second support rods (200); two force application rods (207) are hinged to both sides of the transmission block (206), respectively; the force application rods (207) and the corresponding hinged blocks are hinged; the transmission block (206) is movable in the axial direction of the second support rods (200); and the second trigger portions (215) are movable in the axial direction of the second support rods (200) and are in transmission connection with the transmission block (206).

8. The chassis according to claim 7, wherein the two second trigger portions (215) are fixed to each other via a transmission rod (208); the transmission rod (208) is rotationally provided with a connecting portion (209); and a hinged rod (210) is arranged between the connecting portion (209) and the transmission block (206) for transmission.

9. The chassis according to claim 8, wherein the connecting portion (209) and the transmission rod (208) are in rotational connection therebetween; the connecting portion (209) is provided with a limiting slot (211); the transmission rod (208) is fixedly provided with a limiting portion (212); the limiting portion (212) extends into the limiting slot (211); and the limiting portion (212) is abuttable against the limiting slot (211).

10. The chassis according to claim 5, wherein one or two of the connecting rods (400) is/are provided with brake pedals (401) that are rotatable relative to each other; each of the wheels (300) is fixedly provided with a brake block (301); a plurality of brake slots (302) are arranged at intervals in a circular pattern on the brake block (301) around a rolling axis of the wheel (300); the wheel (300) is provided with a brake rod (303); the brake rod (303) is movable vertically relative to the rolling axis of the wheel (300); the brake rod (303) and the brake pedal (401) are in transmission connection; and as the brake pedals (401) are pedaled down, the brake rod (303) extends into the brake slot (302).

11. The chassis according to claim 10, wherein each of the connecting rods (400) is provided with a linearly movable drive rod (402); the drive rod (402) has one end abutted against an end of the brake rod (303); each of the brake pedals (401) is provided with a connecting slot (403); a transmission inclined plane is arranged inside the connecting slot (403); the transmission inclined plane is abutted against the other end of the drive rod (402), and as the brake pedals (401) are pedaled down, the transmission inclined plane rotates to drive the drive rod (402) to slide towards to both sides, and the drive rod (402) drives the brake rod (303) to extend into the brake slot (302).

12. A stroller frame, comprising the chassis according to any one of claims 5 to 11, and further comprising a stroller assembly, wherein the stroller assembly comprises two push bars (700) that operate synchronously; the two push bars (700) are hinged to the corresponding second support rods (200), respectively; a diagonal bracing rod (604) is hinged on each of the second trigger portions (215)and is hinged to the corresponding push bar (700); and when the first support rod (100) and the second support rod (200) are in usage state, a triangle is formed among axes of the push bar (700), the diagonal bracing rod (604) and the first support rod (100).

13. The stroller frame according to claim 12, wherein each of the push bars (700) comprises a first push handle (500) and a second push handle (501); the two first push handles (500) are fixed via a connecting push handle (502) therebetween for fixation; the second push handles (501) and the second support rods (200) are hinged; the first push handles (500) and the second push handles (501) are rotationally connected to each other; first locking members are arranged between the first push handles (500) and the second push handles (501); and second locking members are arranged between the second push handles (501) and the second support rods (200).

14. The stroller frame according to claim 12, wherein each of the diagonal bracing rods (604) comprises a first upright rod (605) and a second upright rod (606) that are sleeved with each other and are slidable; the first upright rod (605) and the second push handle (501) are hinged; the second upright rod (606) and the first support rod (100) are hinged; a shock-absorbing elastic member (608) is abutted between the first upright rod (605) and the second upright rod (606); the diagonal bracing rods (604) serve to connect a seat (600); each of the push bars (700) comprises a first push handle (500) and a second push handle (501); the two first push handles (500) are fixed by means of a connecting push handle (502) therebetween; the second push handles (501) and the second support rods (200) are hinged; the first push handles (500) and the second push handles (501) are rotationally connected to each other; first locking members are arranged between the first push handles (500) and the second push handles (501); and second locking members are arranged between the diagonal bracing rods (604) and the second support rods (200).

15. A stroller, comprising the stroller frame according to any one of claims 12 to 14, and further comprising a seat (600), wherein a middle portion of the seat (600) is connected to the diagonal bracing rods (604) via first connecting rods (601) therebetween; one end of the seat (600) is hinged to the push bars (700) via second connecting rods (602) therebetween; one end of the seat (600) is hinged to the diagonal bracing rods (604) via third connecting rods (603) therebetween; and when the push bars (700) are folded and collapsed relative to the second support rods (200), the seat (600) flips relatively therewith.
